# DEMANDE DE BREVET EUROPEEN

(11) **EP 4 186 799 A1**
(43) Date de publication de la demande: **31.05.2023**
(21) Numéro de dépôt: 22208455.0
(22) Date de dépôt: 21.11.2022
(51) Int. Cl.: B64D 33/02, B64F 5/30, F01D 25/00, F02C 7/04, B08B 3/02, B08B 9/00

(54) **ENSEMBLE DE PROPULSION D AÉRONEF COMPRENANT AU MOINS UN DISPOSITIF DE NETTOYAGE D'UNE ENTRÉE D AIR D'UNE NACELLE PAR PULVÉRISATION D'UN LIQUIDE DE NETTOYAGE**

(30) Priorité: 29.11.2021 FR 2112626
(71) Demandeur: AIRBUS OPERATIONS (S.A.S.), 31060 Toulouse (FR)
(72) Inventeur: ALBET, Gregory, 31060 TOULOUSE (FR); BENQUET, Jérôme, 31060 TOULOUSE (FR)
(74) Mandataire: Fantin, Laurent

(57) **Abrégé**

L'invention a pour objet un ensemble de propulsion d'aéronef comprenant une motorisation, une nacelle (32) positionnée autour de la motorisation ainsi qu'un dispositif de nettoyage (58) permettant de retirer les résidus d'insectes afin de conserver des caractéristiques aérodynamiques optimales. Ce dispositif de nettoyage (58) est configuré pour répandre au moins un liquide de nettoyage sur une zone extérieure et avant (56) de l'entrée d'air de la nacelle (32), ledit liquide de nettoyage étant entraîné par un flux d'air (54) à haute vitesse généré par la motorisation et agissant comme un jet d'eau à haute pression favorisant le retrait des résidus d'insectes.

L'invention a également pour objet un procédé de fonctionnement dudit dispositif de nettoyage.

## Description

La présente demande se rapporte à un ensemble de propulsion d'aéronef comprenant au moins un dispositif de nettoyage d'une entrée d'air d'une nacelle par pulvérisation d'un liquide de nettoyage.

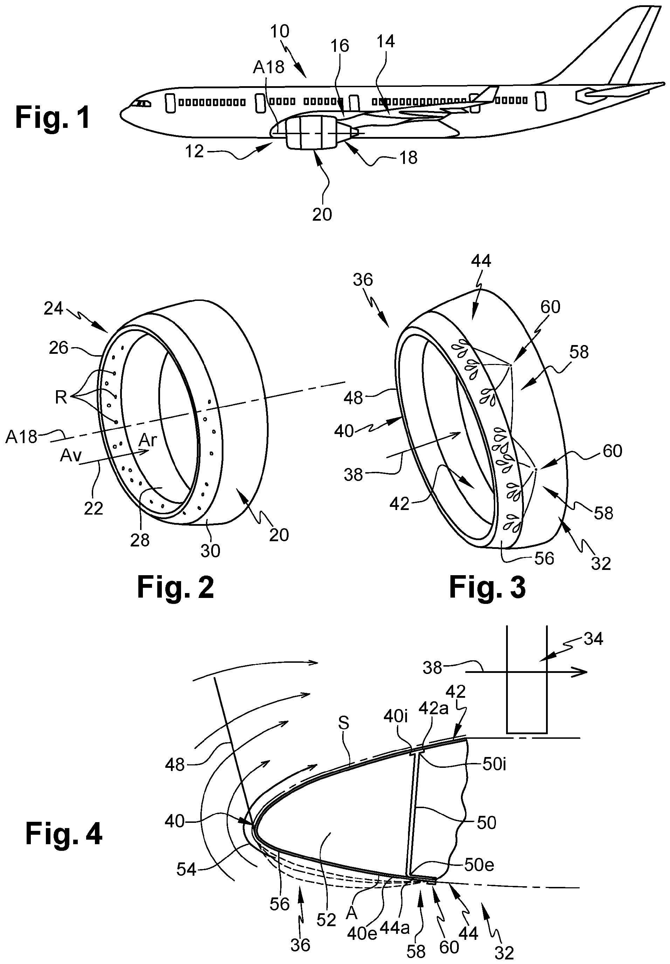

Selon un mode de réalisation visible sur la figure 1, un aéronef 10 comprend plusieurs ensembles de propulsion 12 positionnés sous les ailes 14 de l'aéronef 10 et reliés à ces dernières par des mâts 16. Chaque ensemble de propulsion 12 comprend une motorisation 18, comme un turboréacteur, positionnée à l'intérieur d'une nacelle 20.

Pour la suite de la description, une direction longitudinale est parallèle à l'axe moteur A18 de la motorisation 18 et une direction radiale est perpendiculaire à l'axe moteur A18. Un plan longitudinal contient l'axe moteur A18 de la motorisation 18. Un plan transversal est un plan perpendiculaire à l'axe moteur A18. Les notions avant/arrière, notées Av/Ar, font référence au sens d'écoulement d'un flux d'air 22 dans la nacelle 20 s'écoulant de l'avant (Av) vers l'arrière (Ar).

La nacelle 20 a une forme approximativement tubulaire et comprend à l'avant une entrée d'air 24 via laquelle pénètre le flux d'air 22. Selon une configuration visible sur la figure 2, l'entrée d'air 24 comprend une lèvre 26, un conduit intérieur 28 prolongeant la lèvre 26 vers l'intérieur de la nacelle 20 ainsi qu'une paroi extérieure 30 prolongeant la lèvre 26 à l'extérieur de la nacelle 20.

Selon un mode de réalisation, l'entrée d'air présente un profil aérodynamique laminaire (limitant les perturbations aérodynamiques) permettant d'obtenir un gain en matière de performances aérodynamiques.

En fonctionnement, lorsque des insectes impactent l'entrée d'air 24, des résidus d'insectes R restent collés sur les surfaces de la lèvre 26, du conduit intérieur 28 ainsi que de la paroi extérieure 30 et perturbent les écoulements d'air en contact avec lesdites surfaces, ce qui conduit à annihiler le gain en matière de performances aérodynamiques généré par le profil aérodynamique laminaire de l'entrée d'air, à augmenter la traînée de l'aéronef et sa consommation de carburant. Par conséquent, ces salissures doivent régulièrement être nettoyées entre deux vols lorsque l'aéronef est au sol. Or, ces résidus d'insectes ont tendance à adhérer fortement à la surface, rendant leur retrait difficile.

La présente invention vise à remédier à tout ou partie des inconvénients de l'art antérieur.

A cet effet, l'invention a pour objet un ensemble de propulsion d'aéronef comprenant une motorisation qui présente une soufflante et un axe moteur orienté selon une direction longitudinale ainsi qu'une nacelle positionnée autour de la motorisation, ladite nacelle comportant une lèvre, un conduit intérieur qui prolonge la lèvre vers l'intérieur de la nacelle ainsi qu'une paroi extérieure qui prolonge la lèvre à l'extérieur de la nacelle ; la lèvre, le conduit intérieur et la paroi extérieure présentant une surface aérodynamique, la soufflante, en fonctionnant, générant un phénomène d'aspiration et un flux d'air rentrant en contact avec une zone extérieure et avant de la surface aérodynamique.

Selon l'invention, l'ensemble de propulsion comprend un dispositif de nettoyage configuré pour répandre au moins un liquide de nettoyage sur au moins une partie de la zone extérieure et avant de la surface aérodynamique contre laquelle s'écoule le flux d'air rentrant. En complément, le dispositif de nettoyage comprend plusieurs systèmes de pulvérisation répartis sur au moins une partie de la circonférence de la nacelle et configurés pour pulvériser le liquide de nettoyage en direction de la zone extérieure et avant.

En fonctionnement, le liquide de nettoyage est entraîné par le flux d'air rentrant à haute vitesse et agit comme un jet d'eau à haute pression favorisant le retrait des résidus d'insectes. Dans le cas d'une entrée d'air avec un profil aérodynamique laminaire (limitant les perturbations), le gain obtenu en matière de performances aérodynamique est conservé. Selon une autre caractéristique, la nacelle comprend un cadre avant en forme d'anneau qui s'étend entre un bord intérieur et un bord extérieur, la lèvre présentant un bord arrière intérieur situé approximativement dans le prolongement du cadre avant, à proximité du bord intérieur du cadre avant, ainsi qu'un bord arrière extérieur situé approximativement dans le prolongement du cadre avant, à proximité du bord extérieur du cadre avant. En complément, chaque système de pulvérisation comprend au moins une buse configurée pour générer un jet de liquide de nettoyage, chaque système de pulvérisation étant positionné de manière décalée vers une zone arrière par rapport au bord arrière extérieur de la lèvre et orienté de manière à pulvériser le jet de liquide de nettoyage vers l'avant.

Selon une autre caractéristique, le jet de liquide de nettoyage forme un angle inférieur à 70° par rapport à la direction longitudinale.

Selon une autre caractéristique, chaque système de pulvérisation comprend plusieurs buses générant des jets de liquide de nettoyage orientés selon des directions différentes.

Selon une autre caractéristique, chaque système de pulvérisation comprend trois buses, une première buse pulvérisant un jet de liquide de nettoyage orienté vers l'avant et parallèle à la direction longitudinale, une deuxième buse pulvérisant un jet de liquide de nettoyage orienté vers l'avant et formant un angle compris entre +30 et +60° par rapport à la direction longitudinale ainsi qu'une troisième buse pulvérisant un jet de liquide de nettoyage orienté vers l'avant et formant un angle compris entre -30° et -60°.

Selon une autre caractéristique, chaque système de pulvérisation est fixe, positionné sur la surface aérodynamique et comprend une coque en saillie par rapport à la surface aérodynamique.

Selon une autre caractéristique, chaque système de pulvérisation est mobile entre une position rétractée dans laquelle le système de pulvérisation n'est pas en saillie par rapport à la surface aérodynamique ainsi qu'une position déployée dans laquelle le système de pulvérisation est en saillie par rapport à la surface aérodynamique et peut pulvériser le liquide de nettoyage.

Selon une autre caractéristique, le système de pulvérisation comprend un mât télescopique présentant une première partie solidaire de la nacelle ainsi qu'une deuxième partie mobile par rapport à la première partie au niveau de laquelle est positionnée au moins une buse de sorte que ladite buse soit en saillie par rapport à la surface aérodynamique lorsque le système de pulvérisation est dans la position déployée et ne soit pas en saillie par rapport à la surface aérodynamique lorsque le système de pulvérisation est dans la position rétractée.

Selon une autre caractéristique, la deuxième partie présente une extrémité libre distante de la première partie et positionnée au niveau de la surface aérodynamique lorsque le système de pulvérisation est en position rétractée, ladite extrémité libre présentant une forme affleurante à la surface aérodynamique.

Selon une autre caractéristique, le dispositif de nettoyage comprend au moins un réservoir contenant le liquide de nettoyage, un réseau de tuyau reliant chaque système de pulvérisation au réservoir ainsi qu'au moins une pompe pour acheminer le liquide de nettoyage du réservoir vers les systèmes de pulvérisation.

Selon une autre caractéristique, le liquide de nettoyage présente des propriétés rhéologiques lui permettant de former un film persistant sur la surface aérodynamique.

L'invention a également pour objet un procédé de fonctionnement d'un dispositif de nettoyage d'un ensemble de propulsion d'aéronef caractérisé en ce que le dispositif de nettoyage est activé au moins deux secondes durant lesquelles la motorisation génère une poussée maximale préalablement à un décollage.

Selon une autre caractéristique, le dispositif de nettoyage est activé pendant une durée d'activation comprise entre 5 et 15 secondes.

D'autres caractéristiques et avantages ressortiront de la description de l'invention qui va suivre, description donnée à titre d'exemple uniquement, en regard des dessins annexés parmi lesquels :
- La figure 1 est une vue latérale d'un aéronef,
- La figure 2 est une vue en perspective d'une entrée d'air illustrant un mode de réalisation de l'art antérieur,
- La figure 3 est une vue en perspective d'une entrée d'air illustrant un mode de réalisation de l'invention,
- La figure 4 est une coupe longitudinale d'une partie avant d'une nacelle d'aéronef illustrant un mode de réalisation de l'invention,
- La figure 5 est une vue en perspective d'un système de pulvérisation statique illustrant un mode de réalisation de l'invention, le système proprement dit entouré par un trait étant présenté sur le côté de la figure en vue agrandie,
- La figure 6 est une coupe longitudinale d'une partie d'une nacelle d'aéronef comprenant un système de pulvérisation mobile illustrant un mode de réalisation de l'invention, ledit système de pulvérisation étant en position rétractée sur la partie (A) de la figure et en position déployée sur la partie (B),
- La figure 7 est une vue en perspective d'une partie d'une entrée d'air illustrant par transparence un réservoir de liquide de nettoyage selon un mode de réalisation de l'invention.

Selon un mode de réalisation visible sur les figures 3 et 4, un ensemble de propulsion d'aéronef comprend une motorisation ainsi qu'une nacelle 32 positionnée autour de la motorisation. Cette dernière comprend, à l'avant, une soufflante 34. La nacelle 32 présente, à l'avant de la soufflante 34, une entrée d'air 36 permettant de canaliser un flux d'air intérieur 38 en direction de la motorisation et notamment de la soufflante 34. Une entrée d'air 36 comprend, à l'avant, une lèvre 40, un conduit intérieur 42 prolongeant la lèvre 40 vers l'intérieur de la nacelle 32 pour canaliser un flux d'air en direction de la motorisation ainsi qu'une paroi extérieure 44 prolongeant la lèvre 40 à l'extérieur de la nacelle 32. La nacelle 32 comprend généralement des capots dans le prolongement de la paroi extérieure 44 de la nacelle 32. Selon un mode de réalisation, l'entrée d'air présente un profil aérodynamique laminaire (limitant les perturbations aérodynamiques) permettant d'obtenir un gain en matière de performances aérodynamiques.

La lèvre 40 comprend un bord d'attaque 48 qui correspond à la ligne fermée située la plus à l'avant de la lèvre 40, approximativement circulaire, qui s'étend sur toute la circonférence de la lèvre 40. Lorsque la soufflante 34 ne fonctionne pas, un flux d'air situé à l'avant de la nacelle 32, allant de l'avant vers l'arrière, se scinde au niveau du bord d'attaque 48 en un flux d'air intérieur 38 et un flux d'air extérieur.

La lèvre 40, le conduit intérieur 42 et la paroi extérieure 44 comprennent une surface aérodynamique S (référencée sur la figure 4) en contact avec des flux d'air circulant dans le conduit intérieur 42 de la nacelle 32 et à l'extérieur de la nacelle 32.

La nacelle 32 comprend également un cadre avant 50 en forme d'anneau qui s'étend entre un bord intérieur 50i (orienté vers l'axe longitudinal de la motorisation) et un bord extérieur 50e. La lèvre 40 présente un bord arrière intérieur 40i situé approximativement dans le prolongement du cadre avant 50, à proximité du bord intérieur 50i du cadre avant 50, ainsi qu'un bord arrière extérieur 40e situé approximativement dans le prolongement du cadre avant 50, à proximité du bord extérieur 50e du cadre avant 50. La lèvre 40 et le cadre avant 50 forment un conduit annulaire 52 qui s'étend sur toute la périphérie de l'entrée d'air 36 et présente une section en forme de D dans un plan longitudinal.

Le conduit intérieur 42 présente un bord avant 42a jouxtant le bord arrière intérieur 40i de la lèvre 40 et peut comprendre un ou plusieurs panneaux juxtaposés, répartis sur la circonférence de la nacelle 32. La paroi extérieure 44 présente un bord avant 44a jouxtant le bord arrière extérieur 40e de la lèvre 40 et peut comprendre un ou plusieurs panneaux juxtaposés, répartis sur la circonférence de la nacelle 32.

La nacelle 32 n'est pas plus détaillée car elle peut être identique à celle de l'art antérieur. Comme illustré sur la figure 4, lorsque la soufflante 34 fonctionne, l'air est aspiré à l'intérieur de la nacelle 32. Ce phénomène d'aspiration génère un flux d'air rentrant 54 en contact avec une zone extérieure et avant 56 de la surface aérodynamique S depuis un point A décalé vers l'arrière et l'extérieur de la nacelle par rapport au bord d'attaque 48. Ainsi, le flux d'air rentrant 54 contourne la lèvre 40 avant de rentrer dans la nacelle 32. La zone extérieure et avant 56 s'étend à partir du bord d'attaque 48 en direction de la paroi extérieure 44 sur une distance d'au moins 10 cm.

La zone extérieure et avant 56 présente une dimension selon la direction longitudinale qui varie en fonction du phénomène d'aspiration généré par la soufflante 34. Elle s'étend à partir du bord d'attaque 48 de la lèvre 40 jusqu'à un point A le plus éloigné du bord d'attaque 48 à partir duquel le phénomène d'aspiration de la soufflante 34 produit un flux d'air rentrant 54, en contact avec la lèvre 40, qui contourne la lèvre 40 avant de rentrer dans la nacelle 32. Lorsque la motorisation génère une poussée maximale, préalablement au décollage par exemple, la zone extérieure et avant 56 s'étend jusqu'au bord arrière extérieur 40e de la lèvre 40. Cette zone extérieure et avant 56 s'étend sur toute la circonférence de l'entrée d'air 36. La lèvre 40 et le conduit intérieur 42 présentent un profil configuré pour que le flux d'air rentrant 54 soit laminaire au contact de la surface aérodynamique S.

Selon un mode de réalisation, l'ensemble de propulsion comprend un dispositif de nettoyage 58 configuré pour répandre au moins un liquide de nettoyage sur au moins une partie de la zone extérieure et avant 56 de la surface aérodynamique S contre laquelle s'écoule le flux d'air rentrant 54 laminaire.

Le dispositif de nettoyage 58 comprend plusieurs systèmes de pulvérisation 60 répartis sur au moins une partie de la circonférence de la nacelle 32, de préférence de manière régulière, configurés pour pulvériser le liquide de nettoyage en direction de la zone extérieure et avant 56. Les systèmes de pulvérisation 60 sont agencés de manière à ce que le liquide de nettoyage pulvérisé par les systèmes de pulvérisation 60 se combine au moins en partie avec le flux d'air rentrant 54 afin d'être entraîné par ce dernier au contact de la zone extérieure et avant 56 sur toute la circonférence de la nacelle 32.

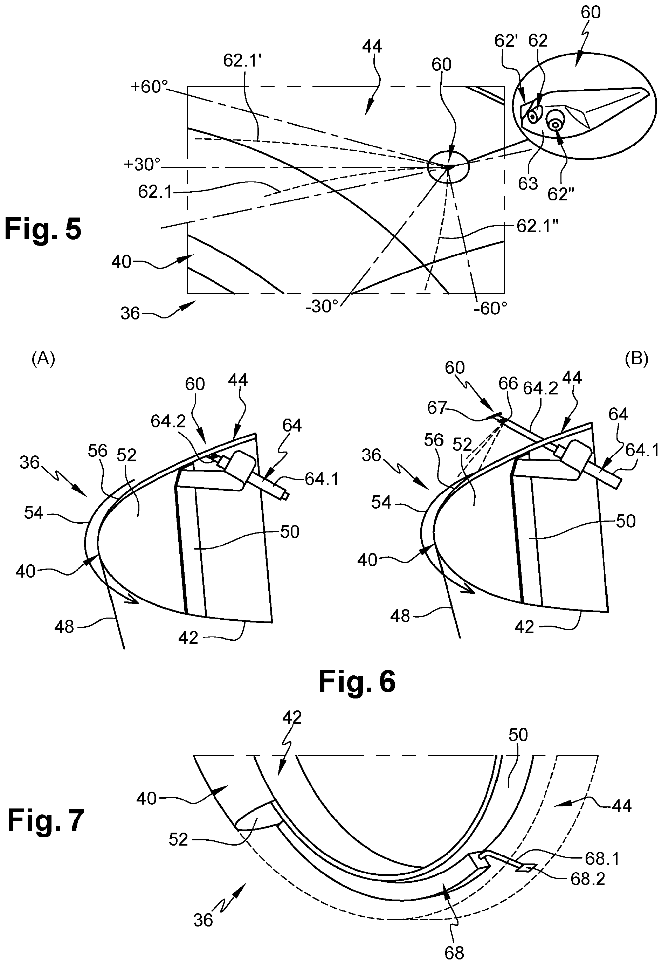

Comme illustré sur la figure 5, chaque système de pulvérisation 60 comprend au moins une buse 62 configurée pour générer un jet de liquide de nettoyage 62.1. Chaque système de pulvérisation 60 est positionné de manière décalée vers l'arrière par rapport au bord arrière extérieur 40e de la lèvre 40 et orienté de manière à pulvériser le jet de liquide de nettoyage 62.1 vers l'avant, ledit jet de liquide formant de préférence un angle inférieur à environ 70° par rapport à la direction longitudinale. En complément, le jet de liquide pulvérisé par le système de pulvérisation 60 forme avec la surface aérodynamique S un angle inférieur à 30° afin qu'une grande partie du liquide de nettoyage pulvérisé soit entraîné par le flux d'air rentrant 54 au contact de la zone extérieure et avant 56 sur toute la circonférence de la nacelle 32.

Selon un mode de réalisation, chaque système de pulvérisation 60 comprend trois buses 62, 62', 62", une première buse 62 pulvérisant un jet de liquide de nettoyage 62.1 orienté vers l'avant et parallèle à la direction longitudinale, une deuxième buse 62' pulvérisant un jet de liquide de nettoyage 62.1' orienté vers l'avant et formant un angle compris entre +30 et +60° par rapport à la direction longitudinale ainsi qu'une troisième buse 62" pulvérisant un jet de liquide de nettoyage 62.1" orienté vers l'avant et formant un angle compris entre -30° et -60° par rapport à la direction longitudinale.

Bien entendu, l'invention n'est pas limitée à ce nombre de buses ou à ces orientations pour les jets de liquide de nettoyage. Généralement, chaque système de pulvérisation 60 comprend plusieurs buses 62 générant des jets de liquide de nettoyage orientés selon des directions différentes.

Selon un mode de réalisation visible sur la figure 5, le système de pulvérisation 60 est fixe et positionné sur la surface aérodynamique S. Selon une configuration, chaque système de pulvérisation 60 comprend une coque en saillie par rapport à la surface aérodynamique S, avec un profil aérodynamique (limitant les perturbations sur les écoulements d'air) comme une forme de goutte d'eau par exemple, pour limiter son impact sur les propriétés aérodynamiques de la nacelle 32. Selon un mode de réalisation, la coque en saillie présente un profil symétrique par rapport à un plan longitudinal et comprend une partie avant qui présente une dimension longitudinale réduite ainsi qu'une partie arrière qui présente une dimension dans la direction perpendiculaire à la direction longitudinale diminuant, au moins en partie, dans le sens avant arrière et une dimension dans la direction verticale au moins également, au moins en partie, diminuant dans le sens avant arrière. La partie avant décrit, au niveau de la surface aérodynamique, un demi-cercle et comprend un chant incliné 63 qui s'étend sur un rayon de l'ordre de 180° et présente une forme approximativement tronconique. Les buses 62 sont positionnées sur le chant incliné 63 de la partie avant de la coque en saillie.

Selon un mode de réalisation visible sur la figure 6, le système de pulvérisation 60 est mobile entre une position rétractée, visible sur la partie gauche (A) de la figure 6, dans laquelle le système de pulvérisation 60 n'est pas en saillie par rapport à la surface aérodynamique S ainsi qu'une position déployée, visible sur la partie droite (B) de la figure 5, dans laquelle le système de pulvérisation 60 est en saillie par rapport à la surface aérodynamique S et peut pulvériser le liquide de nettoyage. Selon une configuration, le système de pulvérisation 60 comprend un mât télescopique 64 présentant une première partie 64.1 solidaire de la nacelle 32, notamment du cadre avant 50, ainsi qu'une deuxième partie 64.2 mobile par rapport à la première partie 64.1, au niveau de laquelle est positionnée au moins une buse 66 de sorte que ladite buse 66 soit en saillie par rapport à la surface aérodynamique S lorsque le système de pulvérisation 60 est dans la position déployée et ne soit pas en saillie par rapport à la surface aérodynamique S lorsque le système de pulvérisation 60 est dans la position rétractée. La deuxième partie 64.2 présente une extrémité libre 67 distante de la première partie 64.1 et positionnée au niveau de la surface aérodynamique S lorsque le système de pulvérisation 60 est en position rétractée, ladite extrémité libre 67 présentant une forme affleurante à la surface aérodynamique S pour ne pas générer de perturbations aérodynamiques.

Les systèmes de pulvérisation 60 sont positionnés de manière à ne pas perturber le flux d'air s'écoulant contre la surface aérodynamique S à l'extérieur de la nacelle 32.

Le jet de liquide de nettoyage n'est pas nécessairement pulvérisé à haute pression. Selon l'invention, le liquide de nettoyage est entraîné à grande vitesse par le flux d'air rentrant 54 laminaire au contact de la surface aérodynamique S. Ainsi, la combinaison du liquide de nettoyage et du flux d'air rentrant 54 laminaire permet d'obtenir un effet de récurage ou abrasif à la manière d'un jet à haute pression.

Le dispositif de nettoyage 58 comprend au moins un réservoir 68 contenant le liquide de nettoyage, un réseau de tuyau reliant chaque système de pulvérisation 60 au réservoir 68 ainsi qu'au moins une pompe pour acheminer le liquide de nettoyage du réservoir 68 vers les systèmes de pulvérisation 60. Selon un agencement, le réservoir 68 est positionné dans la nacelle 32, à l'arrière du cadre avant 50, et relié à ce dernier. Selon un mode de réalisation, le réservoir 68 présente une forme allongée et courbe de manière à suivre le rayon de courbure du conduit intérieur 42 et au moins une face plane de manière à être plaqué contre le cadre avant 50.

Selon une configuration, le réservoir 68 présente une contenance de l'ordre de 10 à 15 litres. Ce dernier comprend un conduit de remplissage 68.1 débouchant via une ouverture obturée par un bouchon et cachée par une trappe 68.2 affleurant la surface aérodynamique S.

Le liquide de nettoyage pulvérisé par le dispositif de nettoyage 58 peut être de l'eau. Selon une configuration, le liquide de nettoyage présente des propriétés rhéologiques qui lui permettent de former un film persistant sur la surface aérodynamique S, configuré pour limiter l'accroche des résidus d'insectes. Par persistant, on entend que le film reste actif et sur la surface aérodynamique S pendant plusieurs minutes.

En fonctionnement, les risques d'impacts d'insectes varient en fonction des conditions météorologiques et des phases de vols. Ainsi, les risques d'impacts d'insectes sont plus importants lorsque la température de l'air est comprise entre 10 et 40°C et que le taux d'humidité est supérieur ou égal à 70%. Ils sont également plus importants lors des phases de décollage et d'atterrissage.

Si nécessaire, le réservoir 68 est rempli de liquide de nettoyage lorsque l'aéronef est à l'arrêt au sol dans sa position de stationnement. Lorsque l'aéronef se déplace de sa position de stationnement jusqu'à la piste de décollage avec un régime moteur au ralenti, les conditions météorologiques peuvent être propices aux impacts d'insectes.

Selon un mode opératoire possible, le dispositif de nettoyage de l'invention peut être activé par le pilote depuis la cabine de pilotage de l'aéronef. Il est activé pendant environ les dix premières secondes durant lesquelles la motorisation génère la poussée maximale préalablement au décollage. Cette activation est déclenchée uniquement lorsque les conditions météorologiques sont propices aux impacts d'insectes.

La durée d'activation varie d'un aéronef à l'autre. A minima, la durée d'activation est d'au moins 2 secondes. Généralement, la durée d'activation est comprise entre 5 et 15 secondes. Lors de l'activation du dispositif de nettoyage, l'aéronef est statique ou se déplace au sol à faible vitesse.

Lors de cette activation, le liquide de nettoyage est entraîné par le flux d'air rentrant 54 à haute vitesse et agit comme un jet d'eau à haute pression favorisant le retrait des résidus d'insectes.

Grâce à ses propriétés rhéologiques, le liquide de nettoyage forme un film sur la surface aérodynamique S limitant l'accroche des résidus d'insectes pendant le reste de la phase de décollage.

L'invention permet d'éviter que des résidus d'insectes ne restent collés sur les surfaces aérodynamiques de l'entrée d'air et que les performances aérodynamiques de l'aéronef ne soient impactées.

## Revendications

1. Ensemble de propulsion d'aéronef comprenant une motorisation présentant une soufflante (34) et un axe moteur orienté selon une direction longitudinale ainsi qu'une nacelle (32) positionnée autour de la motorisation, ladite nacelle (32) comportant une lèvre (40), un conduit intérieur (42) prolongeant la lèvre (40) vers l'intérieur de la nacelle (32) ainsi qu'une paroi extérieure (44) prolongeant la lèvre (40) à l'extérieur de la nacelle (32), la lèvre (40), le conduit intérieur (42) et la paroi extérieure (44) présentant une surface aérodynamique (S), la soufflante (34) qui génère en fonctionnant un phénomène d'aspiration et un flux d'air rentrant (54) en contact avec une zone extérieure et avant (56) de la surface aérodynamique (S) ; **caractérisé en ce que** l'ensemble de propulsion comprend un dispositif de nettoyage (58) configuré pour répandre au moins un liquide de nettoyage sur au moins une partie de la zone extérieure et avant (56) de la surface aérodynamique (S) contre laquelle s'écoule le flux d'air rentrant (54), le dispositif de nettoyage (58) comprenant plusieurs systèmes de pulvérisation (60) répartis sur au moins une partie de la circonférence de la nacelle (32) et configurés pour pulvériser le liquide de nettoyage en direction de la zone extérieure et avant (56).

2. Ensemble de propulsion d'aéronef selon la revendication précédente, la nacelle (32) comprenant un cadre avant (50) en forme d'anneau qui s'étend entre un bord intérieur (50i) et un bord extérieur (50e), la lèvre (40) présentant un bord arrière intérieur (40i) situé approximativement dans le prolongement du cadre avant (50), à proximité du bord intérieur (50i) du cadre avant (50), ainsi qu'un bord arrière extérieur (40e) situé approximativement dans le prolongement du cadre avant (50), à proximité du bord extérieur (50e) du cadre avant (50) ; **caractérisé en ce que** chaque système de pulvérisation (60) comprend au moins une buse (62) configurée pour générer un jet de liquide de nettoyage (62.1), chaque système de pulvérisation (60) étant positionné de manière décalée vers une zone arrière par rapport au bord arrière extérieur (40e) de la lèvre (40) et orienté de manière à pulvériser le jet de liquide de nettoyage (62.1) vers l'avant.

3. Ensemble de propulsion d'aéronef selon la revendication précédente, **caractérisé en ce que** le jet de liquide de nettoyage (62.1) forme un angle inférieur à 70° par rapport à la direction longitudinale.

4. Ensemble de propulsion d'aéronef selon la revendication 2 ou 3, **caractérisé en ce que** chaque système de pulvérisation (60) comprend plusieurs buses (62) générant des jets de liquide de nettoyage orientés selon des directions différentes.

5. Ensemble de propulsion d'aéronef selon la revendication précédente, **caractérisé en ce que** chaque système de pulvérisation (60) comprend trois buses (62, 62', 62"), une première buse (62) pulvérisant un jet de liquide de nettoyage (62.1) orienté vers l'avant et parallèle à la direction longitudinale, une deuxième buse (62') pulvérisant un jet de liquide de nettoyage (62.1') orienté vers l'avant et formant un angle compris entre +30 et +60° par rapport à la direction longitudinale ainsi qu'une troisième buse (62") pulvérisant un jet de liquide de nettoyage (62.1") orienté vers l'avant et formant un angle compris entre -30° et - 60°.

6. Ensemble de propulsion d'aéronef selon l'une des revendications précédentes, **caractérisé en ce que** chaque système de pulvérisation (60) est fixe, positionné sur la surface aérodynamique (S) et comprend une coque en saillie par rapport à la surface aérodynamique (S).

7. Ensemble de propulsion d'aéronef selon l'une des revendications 1 à 5, **caractérisé en ce que** chaque système de pulvérisation (60) est mobile entre une position rétractée dans laquelle le système de pulvérisation (60) n'est pas en saillie par rapport à la surface aérodynamique (S) ainsi qu'une position déployée dans laquelle le système de pulvérisation (60) est en saillie par rapport à la surface aérodynamique (S) et peut pulvériser le liquide de nettoyage.

8. Ensemble de propulsion d'aéronef selon la revendication précédente, **caractérisé en ce que** le système de pulvérisation (60) comprend un mât télescopique (64) présentant une première partie (34.1) solidaire de la nacelle (32) ainsi qu'une deuxième partie (34.2) mobile par rapport à la première partie (34.1) au niveau de laquelle est positionnée au moins une buse (66) de sorte que ladite buse (66) soit en saillie par rapport à la surface aérodynamique (S) lorsque le système de pulvérisation (60) est dans la position déployée et ne soit pas en saillie par rapport à la surface aérodynamique (S) lorsque le système de pulvérisation (60) est dans la position rétractée.

9. Ensemble de propulsion d'aéronef selon la revendication précédente, **caractérisé en ce que** la deuxième partie (64.2) présente une extrémité libre (67) distante de la première partie (64.1) et positionnée au niveau de la surface aérodynamique (S) lorsque le système de pulvérisation (60) est en position rétractée, ladite extrémité libre (67) présentant une forme affleurante à la surface aérodynamique (S).

10. Ensemble de propulsion d'aéronef selon l'une des revendications précédentes, **caractérisé en ce que** le dispositif de nettoyage (58) comprend au moins un réservoir (68) contenant le liquide de nettoyage.

11. Ensemble de propulsion d'aéronef selon la revendication précédente, **caractérisé en ce que** le liquide de nettoyage présente des propriétés rhéologiques lui permettant de former un film persistant sur la surface aérodynamique (S).

12. Procédé de fonctionnement d'un dispositif de nettoyage (58) d'un ensemble de propulsion d'aéronef selon l'une des revendications précédentes, **caractérisé en ce que** le dispositif de nettoyage est activé au moins deux secondes durant lesquelles la motorisation génère une poussée maximale préalablement à un décollage

13. Procédé selon la revendication 12, **caractérisé en ce que** le dispositif de nettoyage est activé pendant une durée d'activation comprise entre 5 et 15 secondes.
